# EUROPEAN PATENT APPLICATION

(11) **EP 0 713 763 A1**
(43) Date of publication of application: **29.05.1996**
(21) Application number: 95118487.8
(22) Date of filing: 23.11.1995
(51) Int. Cl.: B32B 1/08, F16L 58/10, F16L 59/14

(54) **Foamable covering tube**

(30) Priority: 24.11.1994 JP 289974/94; 03.10.1995 JP 256536/95
(71) Applicant: SUMITOMO ELECTRIC INDUSTRIES, LTD., Osaka-shi, Osaka 541 (JP)
(72) Inventor: Haruta, Hideo, c/o Kumatori Works of Sumitomo, Sennan-gun, Osaka (JP); Morinaga, Hayato, c/o Kumatori Works of Sumitomo, Sennan-gun, Osaka (JP)
(74) Representative: Grünecker, Kinkeldey, Stockmair & Schwanhäusser Anwaltssozietät

(57) **Abstract**

A foamable covering tube of the present invention includes an inner layer and outer layer. The inner layer has heat formability so that the inner layer is in intimate contact with a surface of an object to be covered by heat foaming and expansion thereof after the tube is put on the object. The outer layer suppresses outward expansion of the inner layer. The inner layer undergoes foaming and expansion between the outer layer and the object.

## Description

### BACKGROUND OF THE INVENTION

### 1. Field of the Invention

The present invention relates to a foamable covering tube which is used for covering metallic pipes, metallic rods, cables, and the like.

### 2. Description of the Related Art

Shrinkable tubes comprised of foamed material are used so that a covering layer comprised of foamed material of synthetic resin is formed on the surface of such objects as metallic pipes to provide heat insulation, anti-corrosion, waterproofness, and cushioning.

Such shrinkable tubes are produced by extrusion-molding a thermoplastic resin containing a foaming agent to have a tube shape, and after foaming, expanding the tube in its radial direction with heating followed by cooling in the expanded state. Then, the shrinkable tube is put on a metallic pipe, etc. and heated to cause shrinkage to form a covering layer in intimate contact with the pipe.

When the extruded tubing is expanded in its radial direction under heat to impart heat shrinkability, part of the cells previously formed by extrusion foaming are collapsed, thereby resulting in reductions in shrink properties and fit to an object to-be covered. A covering layer formed of this type of shrinkable tubes can fail to provide the object with sufficient anti-corrosion and waterproofness. Collapse of part of the cells also leads to insufficient heat insulation and cushioning.

Examined Japanese Patent Publication (kokoku) No. Sho. 58-3819 discloses a shrinkable tube combining heat formability and heat shrinkability, which is obtained by extruding a thermoplastic resin containing a foaming agent into tubing without causing foaming, and expanding the extruded foamable tubing in its radial direction under heat, followed by cooling. Since shrinkability is provided before foaming, there is no fear of cells' collapsing.

The above-mentioned shrinkable tube, put on an object to be covered, undergoes shrinkage on heating and is once brought into intimate contact with the object. However, foaming following the shrinkage causes expansion of the tube as a whole, which enlarges the inner diameter of the tube and eventually releases the tube from the surface of the object or at least reduces the adhesion of the tube to the surface of the object. Therefore, the shrinkable tube of this type can still fail to assure sufficient anti-corrosion and waterproofness.

Unexamined Japanese Utility Model Publication (jikkai) No. Sho. 59-34195 discloses a shrinkable tube composed of an outer layer having heat shrinkability having provided on the inner side thereof a foamed synthetic resin layer. Since gas in the inner cellular layer hinders shrinkage of the outer layer, this tube exhibits insufficient adhesion to an object for imparting satisfactory anti-corrosion or waterproofness.

Unexamined Japanese Patent Publication (kokai) No. Hei. 5-8335 discloses a shrinkable tube obtained by expanding a laminate tube composed of a foamed layer and a non-foamed layer, both formed of a thermoplastic resin, in its radial direction under heating followed by cooling. Similarly to the above-described shrinkable tube composed of a single foamed layer, since the shrinkable tube of this type suffers from collapse of part of the cells during the radial expansion, it has insufficient shrinkability, failing to provide sufficient anti-corrosion or waterproofness. Heat insulation and cushioning effects of the formed covering layer are also insufficient for the same reason.

The above problem might be possibly solved by making a foamable layer be foamed simultaneously with the radial expansion under heat. This being the case, however, gas in the foamed cellular layer interferes with shrinkage, causing the same problem as with the aforesaid shrinkable tube having a shrinkable outer layer and an inner foamed resin layer, i.e., weak adhesion to an object. In this case, too, the shrinkable tube cannot impart sufficient anti-corrosion and waterproofness to the covered object.

### SUMMARY OF THE INVENTION

It is an object of the present invention to provide a shrinkable tube which has a high adhesion to an object to be covered and provide the object with sufficient anti-corrosion and waterproofness as well as has excellent heat insulation and cushioning effects.

A covering tube of the present invention is comprised of an outer layer having no heat shrinkability and an inner layer having heat formability.

Further, a foamable covering tube of the present invention is comprised of an outer layer having heat shrinkability and an inner layer having heat formability.

The first foamable covering tube of the present invention is heated after put on an object to be covered, so that the inner layer undergoes foaming and expansion between the object and the outer layer. The expansion force is directed predominantly inward because the outer layer, which is laminated outside the inner layer, suppresses outward expansion of the inner layer. As a result, there is formed a covering layer with its inner layer having foamed and being in intimate contact with the surface of the object.

The first foamable covering tube is to form a covering layer not through heat shrinkage but through predominantly inward expansion force due to foaming of the inner layer. The adhesion of the covering layer to an object can be made sufficiently high by appropriate adjustment of, for example, (1) expansion ratio of the inner layer and (2) dimensional ratio of inner diameter of the inner layer to outer diameter of an object to be covered (3) softening temperature and thickness of the outer layer. Accordingly, it is possible with this foamable covering tube to form a covering layer which can provide an object being covered with sufficient anti-corrosion and waterproofness and which is also excellent in heat insulation and cushioning properties.

When the second foamable covering tube of the present invention is heated while being put on an object to be covered, the outer layer shrinks inward while the inner layer expands. The expansion force of the inner layer is directed predominantly inward because, similarly to the case of the first embodiment, the outer layer laminated outside the inner layer suppresses outward expansion of the inner layer. As a result, there is formed a covering layer with its inner layer having foamed and being in intimate contact with the surface of the object.

The second foamable covering tube of the present invention is to form a covering layer through both heat shrinkage of the outer layer and predominantly inward expansion force due to foaming of the inner layer. The adhesion of the covering layer to an object can be made sufficiently high by appropriate adjustment of, for example, (1) foaming temperature and foaming rate of the inner layer, (2) expansion ratio of the inner layer, (3) dimensional ratio of inner diameter of the inner layer to outer diameter of an object to be covered, and (4) shrink temperature and shrink force of the outer layer. Accordingly, it is possible with this foamable covering tube to form a covering layer which can provide an object being covered with sufficient anti-corrosion and waterproofness and which is also excellent in heat insulation and cushioning properties.

Additionally, the second foamable covering tube can form a covering layer with its outer diameter reduced by the shrinkage of the outer layer. Therefore, it is applicable, with no difficulty, to such a case where an object to be covered has a bend so that a shrinkable tube to be used should have a wider inner diameter, leading to a so increased outer diameter, than a prescribed dimension so as to be put on the object smoothly.

### BRIEF DESCRIPTION OF THE DRAWINGS

In the accompanying drawings;
Fig. 1 is a cutaway perspective view of a foamable covering tube according to the present invention;
Figs. 2A and 2B are cross sectional views of one embodiment of the foamable covering tube according to the present invention, in its state before foaming and after foaming, respectively;
Figs. 3A and 3B are cross sectional views of another embodiment of the foamable covering tube according to the present invention, in its state before foaming and after foaming, respectively;
Figs. 4A and 4B are sectional views illustrating application of the foamable covering tube of Figs. 3A and 3B to a cable which is to be fixed at a partition, the tube being in its state before foaming and after foaming, respectively;
Figs. 5A, 5B, and 5C are cross sectional views of a still another embodiment of the foamable covering tube according to the present invention, in its state before shrinking and foaming, after shrinking, and after foaming, respectively; and
Figs. 6A, 6B, and 6C are cross sectional views of a yet another embodiment of the foamable covering tube according to the present invention, in its state before shrinking and foaming, after shrinking, and after foaming, respectively.

### DETAILED DESCRIPTION OF THE INVENTION

Detailed description of the present invention will be described referring to the accompanying drawings.

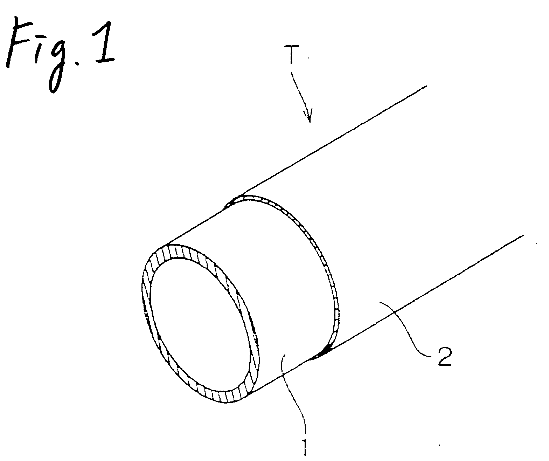

As shown in Fig. 1, a foamable covering tube T according to the present invention has an inner layer 1 and an outer layer 2, the latter being laminated outside the former. A foamable covering tube T of the first embodiment includes an outer layer 2 with no heat shrinkability and an inner layer 1 with heat formability. A foamable covering tube T of the second embodiment includes an outer layer 2 with heat shrinkability and an inner layer 1 with heat formability.

The inner layer 1 constituting foamable covering tube T of the first embodiment is formed by molding a base resin having dispersed therein a foaming agent into tubing at a temperature below the foaming temperature of the foaming agent. The outer layer 2 is formed by molding a base resin into tubing in the same manner. It is preferable to form the outer layer 2 out of a base resin which does not melt at the foaming temperature of inner layer 1 in order to ensure the effect of suppressing the outward expansion of inner layer 1.

Extrusion molding is recommended for formation of the inner layer 1 and the outer layer 2. While it is possible to combine separately prepared the inner layer 1 and the outer layer 2, extrusion molding allows lamination of the two layers simultaneously with extrusion, or lamination of the outer layer 2 being extruded on previously formed the inner layer 1.

The base resin which can be used in the inner layer 1 and the outer layer 2 can be selected from various known resins. In order to form a soft coating layer, in particular, it is preferable to use those which are soft in themselves.

Since most of soft base resins are easily melted on heating, the layers before foaming are preferably crosslinked by irradiation with electron beams or γ-rays. Crosslinking may alternatively be effected by addition of a crosslinking agent to the layers.

Adhesion of the covering layer to an object being covered can further be improved by using hot-melt adhesive resins to form inner and/or outer layers endowed with adhesiveness. In this case, it is desirable to add a crosslinking inhibitor or not to add a crosslinking agent to an adhesive layer formed of a hot-melt adhesive resin because the adhesiveness of the layer may be reduced if the layer is crosslinked by irradiation with electron beams, etc. or by the action of an added crosslinking agent.

In stead of endowing the inner layer 1 or the outer layer 2 with adhesiveness, an adhesive layer including a hot-melt adhesive may be provided on the inner surface of the inner layer 1 and/or the outer surface of the outer layer 2.

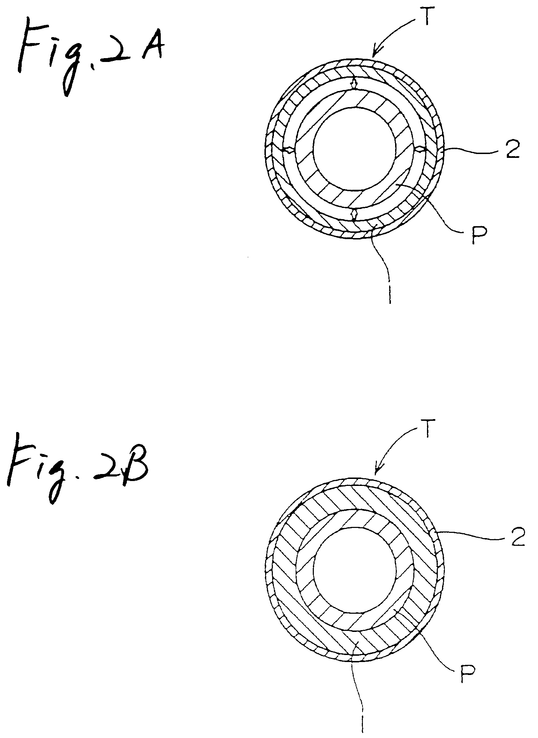

Foamable covering tube T according to the first embodiment is used to form a covering layer on, for example, a metallic pipe as follows. As shown in Fig. 2A, the foamable covering tube T is put on a metallic pipe P and heated to a temperature not lower than the foaming temperature of the foaming agent present in the inner layer 1, whereby the inner layer 1 is foamed and expanded between the metallic pipe P and the outer layer 2. The expansion force is directed predominantly inward as indicated by hollow arrows in Fig. 2A. As a result, inner layer 1 comes in intimate contact with metallic pipe P to form around metallic pipe P a covering layer for providing heat insulation, anti-corrosion, waterproofness, and cushioning as shown in Fig. 2B.

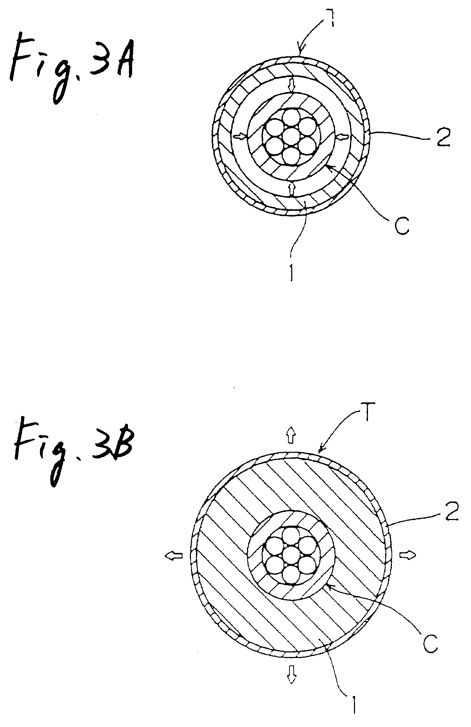

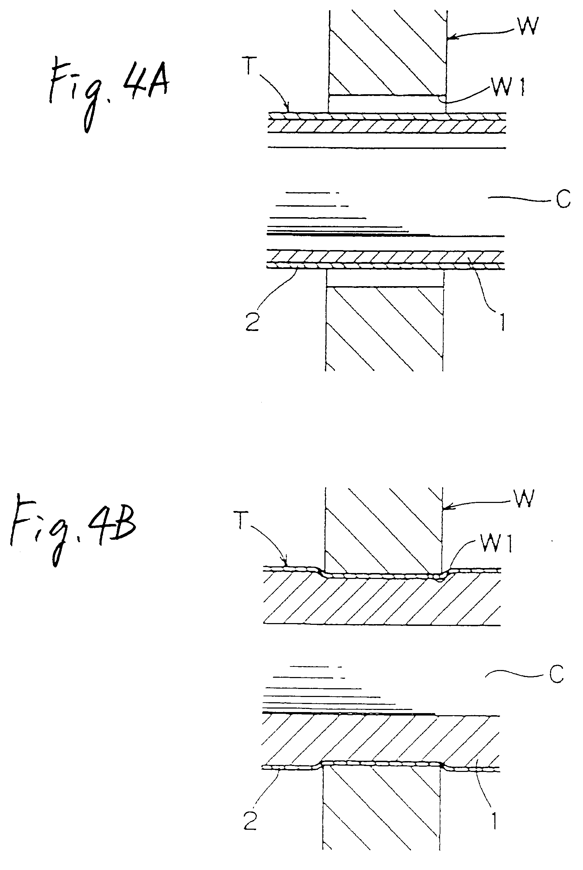

In the above embodiment, the foamable covering tube T does not show change in outer diameter. In another embodiment shown in Figs. 3A and 3B, after the inner layer 1 is expanded inward as indicated by hollow arrows of Fig. 3A to come in contact intimately with a cable C, the tube T continues expanding outward by residual expansion force as indicated by hollow arrows of Fig. 3B. Such a foamable covering tube as is capable of expanding outward is taken advantage of when applied, for example, to the cable C which passes through a hole W1 of a partition W and should be fixed at the hole W1 as shown in Figs. 4A and 4B. In such application, it has been a practice to prepare several kinds of fixing members to be chosen in agreement with the outer diameter of cable C, the inner diameter of the hole W1 or the thickness of the partition W. In the case of using the above-mentioned foamable covering tube T capable of expanding outward, a single kind will meet almost all cases, and an improvement in productivity and a reduction in cost can be brought about.

Whether or not the foamable covering tube is capable of expanding outward as well as inward depends on adjustment of the size or number of cells to be formed in the inner layer 1 or the cell retentivity, and the adjustment of these factors can be achieved by selection of the base resin, especially the one forming inner layer 1, selection of the kinds and amounts of the foaming agent and other additives, and the like.

A foamable covering tube T' according to the second embodiment of the present invention will then be described. Similarly to the first embodiment, an inner layer 11 of the foamable covering tube T' of the second embodiment includes a layer formed by molding into tubing a base resin having dispersed therein a foaming agent at a temperature below the foaming temperature of the foaming agent. The inner layer 11 is preferably formed of a base resin which is softened at the shrinking temperature of an outer layer 12 so as not to hinder the heat shrinkage of the outer layer 12.

In order to make the inner layer 11 hard to melt by heat, the inner layer 11 may be crosslinked by irradiation with electron beams or γ-rays or by addition of a crosslinking agent as is the case with the first embodiment.

The inner layer 1 may be formed of a hot-melt adhesive, or an adhesive layer including a hot-melt adhesive may be provided on the inside of the inner layer 11. In this case, a crosslinking inhibitor should be added, or a crosslinking agent should not be added for the same reason as stated above.

The outer layer 2, which is laminated on the inner layer 11, is a layer molded out of a base resin into tubing and then provided with heat shrinkability. The outer layer 12 with heat shrinkability can be prepared in a conventional manner by expanding a molded and crosslinked tube of a base resin in a radial direction under heat followed by rapid cooling.

Crosslinking of the base resin constituting the outer layer 2 can be carried out by irradiation with electron beams or γ-rays or by incorporation of a crosslinking agent into the base resin in the same manner as described above. The thus crosslinked outer layer 12 is hard to melt on heating.

In order to prevent collapse of the foamed inner layer 11 by the shrinkage of the outer layer 12, which leads to reduction in heat insulation or cushioning of the covering layer, it is preferable that the foaming temperature B of the inner layer 1 be higher than the shrinking temperature (S) of the outer layer 12 (B>S) so that foaming of the inner layer 12 may complete after the completion of shrinkage of the outer layer 12. The foaming temperature of the inner layer 11 and the shrinking temperature of the outer layer 12 can be so adjusted by proper selection of the foaming agent to be added to the inner layer 11 and the base resin to constitute the outer layer 12.

Foaming of the inner layer 11 and shrinkage of the outer layer 12 may start nearly at the same time or with a time lag. Foaming of the inner layer 11 and shrinkage of the outer layer 12 start nearly at the same time when the foamable covering tube T' is heated to a temperature not lower than the shrinking temperature of the outer layer 12 and not lower than the foaming temperature of the inner layer 11. On the other hand, foaming of the inner layer 11 and shrinkage of the outer layer 12 start with a time lag when foamable covering tube T' is first heated to a temperature not lower than the shrinking temperature of the outer layer 12 and not higher than the foaming temperature of the inner layer 11 to cause the outer layer 12 to shrink, and then the heating temperature is raised to the foaming temperature of the inner layer 11 or higher to cause the inner layer 11 to foam.

The inner layer 11 and the outer layer 12 are preferably laminated one on the other by co-extrusion of the two layers or extrusion lamination of the outer layer 12 on the previously formed inner layer 11. The extruded outer layer 12 of the resulting tubing can then be endowed with shrinkability by the above-mentioned treatment of crosslinking, expansion under heat, and rapid cooling. Where the base resin of the inner layer 11 is crosslinked, the treatment provides heat shrinkability to the inner layer 11 as well as the outer layer 12. If not, the inner layer 1 is not given heat shrinkability. In the second embodiment of the present invention, the inner layer 1 may or may not have heat shrinkability.

Since the outer layer 12 is to be crosslinked, it is impossible to form the outer layer 12 endowed by adhesiveness by using a hot-melt adhesive as a base resin. Therefore, where the outer layer 12 is requested to have adhesiveness, an adhesive layer including a hot-melt adhesive can be provided on the outer surface of the outer layer 12.

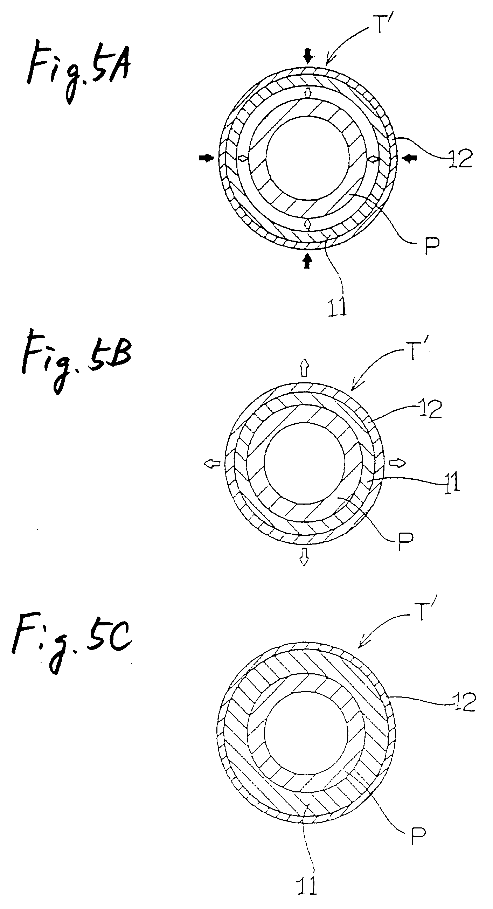

The foamable covering tube T' according to the second embodiment is used to form a covering layer on, for example, a metallic pipe as follows. As shown in Fig. 5A, the foamable covering tube T' is put on metallic pipe P and heated to a temperature not lower than the shrinking temperature of the outer layer 12 and not lower than the foaming temperature of the foaming agent present in the inner layer 11, whereby the outer layer 12 undergoes shrinkage as indicated by solid arrows. At the same time, the inner layer 11 starts foaming as indicated by hollow arrows and comes into intimate contact with metallic pipe P, as shown in Fig. 5B.

As mentioned above, since the inner layer 12 and the outer layer 12 are designed so that completion of shrinkage of the outer layer 12 may precede completion of foaming of the inner layer 11, the inner layer 11 continues foaming and expansion between the metallic pipe P and the outer layer 12 even after the outer layer 12 shrinks to bring the inner layer 11 into contact with the metallic pipe P'. The expansion force of the inner layer 11 is directed predominantly inward by the action of the outer layer 12. As a result, the contact of the inner layer 11 with the metallic pipe P' is made more intimate, while the covering tube T' is made to expand outward by residual expansion force as indicated by hollow arrows of Fig. 5B to form a covering layer having heat insulation, anti-corrosion, waterproofness, and cushioning (Fig. 5C).

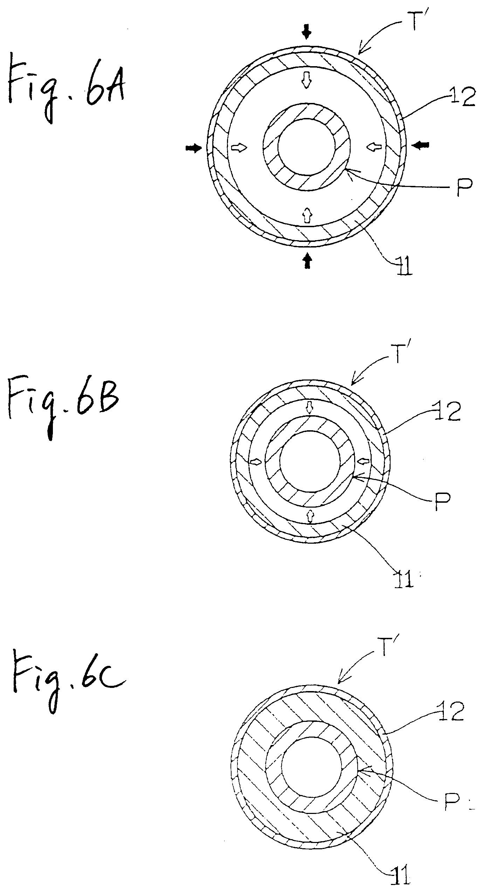

In the above-mentioned embodiment, while the inner diameter of the inner layer 11 and the amount of shrink of the outer layer 12 are decided so that shrinkage of the outer layer 12 may bring the inner layer 11 into intimate contact with metallic pipe P, these factors may be decided so that the inner layer 11 may not be brought into intimate contact with metallic pipe P simply by the shrinkage of the outer layer 12. In this case, formation of a covering layer can be carried out as shown in Figs. 6A and 6B.

The foamable covering tube T' is put on metallic pipe P and heated to a temperature not lower than the shrinking temperature of the outer layer 2 and not lower than the foaming temperature of the foaming agent present in the inner layer 11, whereby the outer layer 2 undergoes shrinkage as indicated by solid arrows as shown in Fig. 6A. At the same time, the inner layer 11 starts foaming as indicated by hollow arrows. At the time when the outer layer 12 completes shrinking, the inner layer 11 has not yet come into contact with metallic pipe P, still leaving a gap therebetween as shown in Fig. 6B. Subsequently, the inner layer 11 continues to foaming and expansion between metallic pipe P and the outer layer 12, the expansion force being directed predominantly inward due to the hindering action of the outer layer 12. As a result, the inner layer 12 expands inward as indicated by hollow arrows of Fig. 6B and comes in intimate contact with metallic pipe P to form a covering layer having heat insulation, anti-corrosion, waterproofness, and cushioning (Fig. 6C).

According to the second embodiment of the present invention, the outer diameter of the foamable covering tube T' is reduced through heat shrinkage of the outer layer 12, and the thus reduced outer diameter is maintained during foaming of the inner layer 12. Accordingly, the foamable covering tube T' of the second embodiment is effective when applied to such a case where an object to be covered has a bend so that a shrinkable tube to be used should have a wider inner diameter, leading to a so increased outer diameter, than a prescribed dimension (i.e., the outer diameter after shrinkage) so as to be put on the object smoothly.

While not limiting, suitable base resins for constituting the inner layer 1(11) and the outer layer 2(12) of the foamable covering tube according to the present invention include olefin resins, such as polyethylene, ethylene-vinyl acetate copolymers (hereinafter abbreviated as EVA), ethylene-ethyl acrylate copolymers (hereinafter abbreviated as EEA), ethylene-α-olefin copolymers, and polypropylene; and elastomers, such as nitrile rubber, butyl rubber, acrylonitrile-butadiene-styrene copolymer rubber, olefin elastomers, styrene elastomers, urethane elastomers, and polyester elastomers. These resins may be used either individually or as combinations of two or more thereof having compatibility with each other.

The hot-melt adhesives, which can be used as base resin for rendering the inner layer 1 and/or the outer layer 2 adhesive in the first embodiment or for rendering the inner layer 11 adhesive in the second embodiment, include, for example, ionomer resins and polyamide resins. Of the resins enumerated above as base resins, EVA and EEA also serve as hot-melt adhesive.

These hot-melt adhesives can also be used as hot-melt adhesive for separately providing an adhesive layer on the inner surface of the inner layer 1(11) and/or the outer surface of the outer layer 2(12) instead of rendering the inner layer 1(12) or the outer layer 2(12) adhesive by itself. It should be noted, however, that the hot-melt adhesive for formation of an adhesive layer is preferably selected from those having a low melting point so as to be melted and softened at a heating temperature for foaming of the inner layer 11 in the first embodiment or at a heating temperature for shrinkage of the outer layer 12 in the second embodiment.

While not limiting, examples of the foaming agent which can be added to the inner layer 1(11) include azo compounds, such as azodicarbonamide and azobisisobutyronitrile; nitroso compounds, such as dinitrosopentamethylenetetramine; and sulfonyl hydrazide compounds, such as p-toluenesulfonyl hydrazide and 4,4'-hydroxybisbenzenesulfonyl hydrazide.

As stated previously, the foaming agent should be selected from those capable of foaming at temperatures higher than the softening point of the thermoplastic resin constituting the inner layer 1(11) in order to prevent the inner layer 1(11) from foaming while it is formed by, for example, extrusion molding. In the case of the second embodiment, the foaming agent should be selected from those capable of foaming at temperatures higher than the shrinking temperature of the outer layer 2(12) so as to prevent foaming while the outer layer 12 shrinks.

The amount of the foaming agent to be used is not particularly limited but preferably ranges from 0.5 to 25 parts by weight, still preferably from 1 to 20 parts by weight, per 100 parts by weight of the thermoplastic resin. If it is less than the above range, foaming of the inner layer 1(11) tends to be insufficient, resulting in insufficient adhesion to an object to be covered. If the amount exceeds the above range, the expansion ratio tends to be too high to assure sufficient strength, particularly cushioning properties, of the resulting covering layer.

If desired, the inner layer 1(11) may further contain an appropriate amount of a foaming assistant, such as a urea compound, zinc oxide, tribasic lead sulfate, and zinc stearate, in order to reduce the foaming temperature of the foaming agent thereby to improve foaming efficiency.

If desired, the inner layer 1(11) and the outer layer 2(12) may further contain various additives in amounts conventionally used. Useful additives include fillers, such as talc, clay, silica, and alumina; flame retardants, such as decabromodiphenyl ether, antimony trioxide, magnesium carbonate, aluminum hydroxide, and zinc borate; and antioxidants, such as phenol antioxidants and amine antioxidants.

The crosslinking agent, which may be added to the inner layer 1(11) and/or the outer layer 2(12) for the purpose of making the layer hardly melting with heat in the first and second embodiments or which is added to the outer layer 12 for the purpose of imparting heat shrinkability to the layer in the second embodiment, includes peroxides, such as dicumyl peroxide, lauryl peroxide, benzoyl peroxide, and methyl ethyl ketone peroxide; thiuram compounds, such as tetramethylthiuram disulfide and tetramethylthiuram monosulfide; and dithiocarbamates, such as zinc dimethyldithiocarbamate.

The crosslinking agent is preferably used in an amount of 0.2 to 4 parts by weight per 100 parts by weight of a base resin.

Additional changes and modifications can further be made in the present invention without departing from the spirit and scope thereof.

The present invention will now be illustrated in greater detail with reference to Examples. Unless otherwise indicated, all the percents and parts are by weight.

### EXAMPLE 1

### Preparation of Molding Material:

A hundred parts of EEA (melt index: 275 g/min; ethyl acrylate content: 25%) as base resin, 7 parts of 4,4'-hydroxybisbenzenesulfonyl hydrazide (foaming agent "CELLMIC S" produced by Sankyo Kasei K.K.; foamable at 140°C or higher), and 5 parts of a crosslinking inhibitor were kneaded in a mixing roll and pelletized in a pelletizer to prepare a molding material for the inner layer.

EVA (melt index: 2 g/min; vinyl acetate content: 5%) was pelletized in a pelletizer to prepare a molding material for an outer layer.

### Preparation of Foamable Covering Tube:

The above prepared molding materials for the inner and outer layers were co-extruded in a two-layer co-extruder at an extrusion temperature of 80°C for inner layer and 130°C for outer layer to obtain a double-layered tube having an inner diameter of 25 mm, an inner layer thickness of 2 mm, and an outer layer thickness of 0.5 mm. The outer layer of the extruded double-layered tube was crosslinked by irradiation with 16 Mrad of an electron beam by means of an electron accelerator to produce the foamable covering tube T including the inner layer 1 and the outer layer 2 as shown in Fig. 2A.

### Formation of Covering Layer:

The foamable covering tube T was put on the aluminum pipe P having an outer diameter of 20 mm as shown in Fig. 2A, and pipe P with the tube T on was placed in a thermostat kept at 140°C for 30 minutes. As a result, the inner layer 1 was foamed and expanded inward to form a covering layer in intimate contact with the pipe P as shown in Fig. 2B.

Observation of the covering layer revealed intimate adhesion to the surface of pipe P with sufficient strength. The measured outer diameter of the covering layer was found unchanged from the initial outer diameter of the foamable covering tube T (30 mm), lending confirmation to the inward expansion of only the inner layer 1. When the temperature of the thermostat was increased to 150°C or 160°C, no change in outer diameter was observed, either.

### EXAMPLE 2

### Preparation of Molding Material:

A hundred parts of EVA (melt index: 15 g/min; vinyl acetate content: 19%) as base resin were kneaded with 7 parts of 4,4'-hydroxybisbenzenesulfonyl hydrazide as foaming agent in a mixing roll and pelletized in a pelletizer to prepare a molding material for the inner layer.

EVA (melt index: 2 g/min; vinyl acetate content: 5%) was pelletized in a pelletizer to prepare a molding material for an outer layer.

### Preparation of Foamable Covering Tube:

The above prepared molding materials for the inner and outer layers were co-extruded in a two-layer co-extruder at an extrusion temperature of 90°C for the inner layer and 130°C for the outer layer to obtain a double-layered tube having an inner diameter of 21 mm, an inner layer thickness of 2 mm, and an outer layer thickness of 0.5 mm. The outer and inner layers of the extruded double-layered tube were crosslinked by irradiation with 16 Mrad of an electron beam by means of an electron accelerator to produce foamable covering tube T including the inner layer 1 and the outer layer 2 as shown in Fig. 3A.

### Formation of Covering Layer:

Thus obtained foamable covering tube T was put on the cable C having an outer diameter of 15 mm as shown in Fig. 3A, and cable C with the tube T on was placed in a thermostat kept at 140°C for 30 minutes. As a result, the inner layer 1 was foamed and expanded inward to form a covering layer in intimate contact with the cable C as shown in Fig. 3B.

Measurement of the outer diameter of the covering tube revealed that the outer layer increased in outer diameter from 26 mm to 34 mm. It was confirmed by observation that the covering layer intimately adhered to the surface of cable C with sufficient strength.

### EXAMPLE 3

### Preparation of Molding Material:

Fifty parts of maleic acid-modified EVA (melt index: 7.0 g/min; vinyl acetate content: 15%) and 50 parts of EVA (melt index: 2.5 g/min; vinyl acetate content: 19%) as base resins, 7 parts of an azodicarbonamide foaming agent ("VINYFOR AC3M", produced by Eiwa Kasei K.K.; foam initiating temperature: 200°C), 0.7 part of zinc oxide as foaming assistant, and 3 parts of a crosslinking inhibitor were kneaded in a mixing roll and pelletized in a pelletizer to prepare a molding material for the inner layer. The foam initiating temperature of the molding material for an inner layer was set at 170°C by the addition of zinc oxide.

EVA (melt index: 0.7 g/min; vinyl acetate content: 15%) was pelletized in a pelletizer to prepare a molding material for the outer layer.

### Preparation of Foamable Covering Tube:

The above prepared molding materials for the inner and outer layers were co-extruded in a two-layer co-extruder at an extrusion temperature of 110°C for the inner layer and 155°C for the outer layer to obtain a double-layered tube having an inner diameter of 7.5 mm, an inner layer thickness of 0.8 mm, and an outer layer thickness of 0.35 mm. The outer layer of the extruded double-layered tube was crosslinked by irradiation with 30 Mrad of an electron beam by means of an electron accelerator, and the double-layered tube was then inflated by applying inner pressure while heating at 140°C up to an inner diameter of 26 mm, immediately followed by rapid cooling to produce the foamable covering tube T' including the inner layer 11 and the outer layer 12 and having a total thickness of 0.4 mm as shown in Fig. 5A.

### Formation of Covering Layer:

The foamable covering tube T' was put on aluminum pipe P having an outer diameter of 20 mm as shown in Fig. 5A, and pipe P with the tube T' on was placed in a thermostat kept at 190°C for 10 minutes. As a result, the outer layer 12 was shrunken and the inner layer 11 was foamed to form a covering layer in intimate contact with pipe P as shown in Fig. 5C.

Measurement of the thickness of the covering layer revealed that the foamable covering tube had expanded from 0.4 mm to 2 mm in thickness. It was confirmed by observation that the covering layer intimately adhered to the surface of pipe P with sufficient strength.

As has been fully described, the foamable covering tube according to the present invention forms a covering layer around an object through foaming of its inner layer having heat formability. The covering layer thus formed provides the object being covered with sufficient anti-corrosion and waterproofness to an extent not heretofore attained by conventional shrinkable tubes and also exhibits excellent heat insulation and cushioning properties.

## Claims

1. A foamable covering tube comprising an outer later having no heat shrinkability and an inner layer having heat formability.

2. A foamable covering tube comprising an outer layer having heat shrinkability and an inner layer having heat formability.

3. A foamable covering tube comprising:
an inner layer having heat formability, which is in intimate contact with a surface of an object to be covered by heat foaming and expansion thereof after said tube is put on said object; and
an outer layer which suppresses outward expansion of said inner layer;
wherein said inner layer undergoes foaming and expansion between said outer layer and said object.

4. A foamable covering tube according to claim 3, wherein said outer layer has heat shrinkability to shrinks inward while said inner layer expands to suppresses outward expansion of said inner layer.

5. A foamable covering tube according to claim 3, wherein said inner layer comprises a first base resin and a foaming agent dispersed therein.

6. A foamable covering tube according to claim 5, wherein said outer layer comprises a second base resin having a melting point which is higher than a foaming temperature of said inner layer.

7. A foamable covering tube according to claim 3, wherein said inner layer comprises a first base resin and a foaming agent and said outer layer comprises a second base resin, said first and second base resins being crosslinked respectively.

8. A foamable covering tube according to claim 7, wherein said first and second base resins include a crosslinking agent respectively.

9. A foamable covering tube according to claim 3, wherein at least one of said inner and outer layers includes a hot-melt adhesive resin.

10. A foamable covering tube according to claim 9, wherein said at least one of said inner and outer layers including said hot-melt adhesive resin includes a crosslinking prohibitor.

11. A foamable covering tube according to claim 3, further comprising an adhesive layer which is provided on at least one of an inner side of said inner layer and an outer side of said outer layer.

12. A foamable covering tube according to claim 11, wherein said adhesive layer comprises a hot-melt resin.

13. A foamable covering tube according to claim 4, wherein said inner layer comprises a first base resin and a foaming agent dispersed therein.

14. A foamable covering tube according to claim 13, wherein said outer layer comprises a second base resin having a shrinking temperature, and said first base resin is softened at substantially the shrinking temperature of said second base resin.

15. A foamable covering tube according to claim 13, wherein said first base resin is crosslinked.

16. A foamable covering tube according to claim 14, wherein said inner layer further comprises a crosslinking agent.

17. A foamable covering tube according to claim 4, wherein said inner layer includes a hot-melt adhesive resin.

18. A foamable covering tube according to claim 4, further comprising an adhesive layer which is provided on an inner side of said inner layer.

19. A foamable covering tube according to claim 18, wherein said adhesive layer comprises a hot-melt resin.

20. A foamable covering tube according to claim 17, wherein said inner layer includes a crosslinking prohibitor.

21. A foamable covering tube according to claim 4, wherein a foaming temperature of said inner layer is higher than a heat shrinkage temperature of said outer layer.
